# DEMANDE DE BREVET EUROPEEN

(11) **EP 2 871 065 A1**
(43) Date de publication de la demande: **13.05.2015**
(21) Numéro de dépôt: 13192549.7
(22) Date de dépôt: 12.11.2013
(51) Int. Cl.: B44C 1/00, B44C 5/04, C03B 17/06, C03C 3/087

(54) **Méthode pour produire des motifs induits magnétiquement dans une couche déposée sur une feuille de verre**

(71) Demandeur: AGC Glass Europe, 1348 Louvain-la-Neuve (BE)
(72) Inventeur: Pieters, Ronny, 1470 Bousval (BE); Lemal, Dominique, 5190 Moustier-Sur-Sambre (BE)
(74) Mandataire: Bayot, Daisy

(57) **Abrégé**

L'invention concerne une méthode pour produire des motifs induits magnétiquement dans une couche déposée sur une feuille de verre, ladite méthode comprenant les étapes successives suivantes pendant que ladite feuille de verre défile sur un convoyeur horizontal à rouleaux, dans une direction perpendiculaire à la plus grande dimension desdits rouleaux : (i) déposer sous forme de couche une composition liquide sur une face de la feuille de verre opposée à celle reposant sur le convoyeur, la composition comprenant des particules orientables magnétiquement ; (ii) exposer sélectivement à un champ magnétique la feuille de verre comportant la couche de composition liquide ; et (iii) durcir la composition liquide. Selon l'invention, l'étape d'exposition sélective à un champ magnétique est réalisée au moyen d'au moins un rouleau dudit convoyeur comportant au moins un élément en matériau à magnétisation variable, contrôlé individuellement et intégré dans sa surface, de manière à produire des lignes de champ magnétique variable dans un voisinage de la feuille défilant sur le convoyeur.

## Description

### 1. Domaine de l'invention

La présente invention concerne une méthode pour produire des motifs produisant une illusion de relief, ou une illusion tridimensionnelle, ou encore une illusion d'épaisseur, dans une couche déposée sur une feuille de verre. En particulier, la présente invention concerne une méthode pour produire des motifs induits magnétiquement dans une couche déposée sur une feuille de verre.

La méthode de l'invention présente notamment des applications dans le domaine de la décoration car les feuilles de verre qu'elle permet de fabriquer peuvent présentent des motifs décoratifs.

### 2. Solutions de l'art antérieur

Plusieurs méthodes de fabrication de substrats plats ou de feuilles, rigides ou flexibles, comportant des motifs induits magnétiquement sont déjà connues. La plupart de ces méthodes utilisent les étapes principales successives suivantes :
- dépôt sous forme de couche sur le substrat d'une composition liquide comprenant des particules magnétisables ou orientables magnétiquement;
- magnétisation sélective desdites particules alors que la composition est encore fluide et que les particules sont dès lors encore mobiles au sein de cette couche, entraînant leur orientation suivant les lignes du champ magnétique appliqué et la création de motifs ; et
   séchage, durcissement et/ou réticulation de la composition afin de figer les particules et donc fixer les motifs créés dans la couche.

Dans les méthodes déjà décrites, le mode de magnétisation/induction magnétique varie. Dans le brevet US3676273, des motifs sont créés dans une couche (de peinture acrylique, par exemple) comprenant des pigments magnétisables et déposée sur un substrat (une plaque en aluminium, par exemple), en interposant entre les aimants (générant le champ magnétique) et le substrat recouvert une feuille d'acier dans laquelle lesdits motifs sont découpés. Cette technique, utilisant le principe du masque pour appliquer sélectivement le champ magnétique, présente cependant de nombreux inconvénients. En particulier, l'existence de ce masque en acier ne permet pas l'utilisation de ce procédé pour de grandes surface de substrat et ne permet pas non plus son intégration en ligne (dans une chaîne de production, par exemple) ni une bonne reproductibilité des motifs. Dans le brevet BE774930, l'induction magnétique est obtenue grâce à une couche « de fond », contenant des particules à aimantation permanente, séchée et aimantée selon le motif désiré. Si une couche liquide contenant des particules magnétisables est déposée sur cette couche de fond, le motif apparaît alors. Cette technique nécessite cependant plus d'étapes et en particulier, le dépôt et le séchage de deux couches distinctes.

### 3. Objectifs de l'invention

L'invention a notamment pour objectif de pallier ces inconvénients de l'art antérieur.

En particulier, un objectif de l'invention est de fournir une méthode pour produire des motifs induits magnétiquement dans une couche déposée sur une feuille de verre, qui peut être utilisée pour de grandes surfaces de feuille de verre et permettant une bonne reproductibilité des motifs.

Un autre objectif de l'invention, dans au moins un de ses modes de réalisation, est de fournir une méthode pour produire des motifs induits magnétiquement dans une couche déposée sur une feuille de verre, qui peut être mise en oeuvre en ligne. En particulier, un objectif de l'invention est de fournir une méthode pour produire des motifs induits magnétiquement dans une couche déposée sur une feuille de verre, qui peut être facilement et rapidement mise en oeuvre dans une chaîne de production existante de feuilles de verre peintes et qui permet également, une fois utilisée dans ladite chaîne de production, de revenir à la chaîne de production initiale de façon rapide et aisée.

Un autre objectif de l'invention, dans au moins un de ses modes de réalisation, est de fournir une méthode pour produire des motifs induits magnétiquement dans une couche déposée sur une feuille de verre, qui présente un degré de liberté important en termes de nature du motif et de l'intensité de sa couleur.

Finalement, l'invention, dans au moins un de ses modes de réalisation, a également pour objectif de fournir une méthode pour produire des motifs induits magnétiquement dans une couche déposée sur une feuille de verre, qui est rapide, économique et comportant un minimum d'étapes.

### 4. Exposé de l'invention

Conformément à un mode de réalisation particulier, l'invention concerne une méthode pour produire des motifs induits magnétiquement dans une couche déposée sur une feuille de verre, ladite méthode comprenant les étapes successives suivantes :
1) déposer sous forme de couche une composition liquide sur au moins une partie d'une des faces de la feuille de verre, ladite composition comprenant des particules orientables magnétiquement ;
2) exposer sélectivement à un champ magnétique la feuille de verre comportant la couche de composition liquide pendant que ladite feuille de verre défile sur un convoyeur horizontal à rouleaux, dans une direction perpendiculaire à la plus grande dimension desdits rouleaux, la composition liquide étant sur la face opposée à celle reposant sur le convoyeur; et
3) durcir la composition liquide ;
l'étape 2) d'exposition sélective à un champ magnétique est réalisée au moyen d'au moins un rouleau dudit convoyeur comportant au moins un élément en matériau à magnétisation variable, contrôlé individuellement et intégré dans sa surface, de manière à produire des lignes de champ magnétique variable dans un voisinage de la feuille défilant sur le convoyeur.

Ainsi, l'invention repose sur une approche nouvelle et inventive car elle permet de solutionner les inconvénients de l'art antérieur précités et de résoudre le problème technique posé. Les inventeurs ont en effet mis en évidence qu'il était possible, grâce à une modification d'au moins un rouleau d'un convoyeur au sein d'une ligne de production existante de feuilles de verre peintes, d'obtenir une méthode pour produire un ou plusieurs motifs induit(s) magnétiquement dans une couche déposée sur une feuille de verre, qui peut être appliquée à de grandes surfaces de verre, qui est reproductible et qui peut être mise en oeuvre facilement et aisément en ligne, avec un minimum d'étapes (en particulier une seule couche est nécessaire), et avec un degré de liberté important en termes de nature du motif et de l'intensité de sa couleur.

D'autres caractéristiques et avantages de l'invention apparaîtront plus clairement à la lecture de la description suivante d'un mode de réalisation préférentiel, donné à titre de simple exemple illustratif et non limitatif, et des figures annexées, parmi lesquelles :
la figure 1 présente schématiquement les étapes de la méthode de l'invention ;
la figure 2 illustre schématiquement l'étape d'exposition sélective à un champ magnétique de la feuille de verre comportant la couche de composition liquide selon l'invention (vue en coupe) ;
la figure 3 illustre schématiquement l'étape d'exposition sélective à un champ magnétique de la feuille de verre comportant la couche de composition liquide selon l'invention et défilant sur un convoyeur à rouleaux (vue de haut) ;
la figure 4 présente schématiquement des exemples d'agencements de motifs induits magnétiquement dans une couche déposée sur une feuille de verre susceptibles d'être obtenus par la méthode de l'invention ; et
la figure 5 présente (a) un schéma du rouleau modifié selon l'invention et (b) une coupe transversale dans la longueur dudit rouleau.

La feuille utilisée dans la méthode selon l'invention est faite de verre pouvant appartenir à diverses catégories. Le verre peut ainsi être un verre de type sodo-calcique, un verre au bore, un verre au plomb, un verre comprenant un ou plusieurs additifs répartis de manière homogène dans sa masse, tels que, par exemple, au moins un colorant inorganique, un composé oxydant, un agent régulateur de la viscosité et/ou un agent facilitant la fusion. Le verre de l'invention peut un verre flotté, un verre étiré ou un verre type « cast » (laminé entre des rouleaux). Il peut être clair, extra-clair, ou coloré dans la masse. La feuille de verre peut être trempée thermiquement ou chimiquement. Selon un mode de réalisation préférée, la feuille de verre est une feuille de verre flotté. De manière toute préférée, la feuille de verre est une feuille de verre flotté de type sodo-calcique. La feuille de verre peut avoir une épaisseur variant entre 0,7 et 18 mm. La feuille de verre peut également avoir des dimensions supérieure à 1 m x 1 m. Elle peut, par exemple, avoir des dimensions de 3,21 m x 6 m ou 3,21 m x 5,50 m ou 3,21 m x 5,10 m ou 3,21 m x 4,50 m (feuille de verre appelée « PLF ») ou encore, par exemple, 3,21 m x 2,55 m ou 3,21 m x 2,25 m (feuille de verre appelée « DLF »).

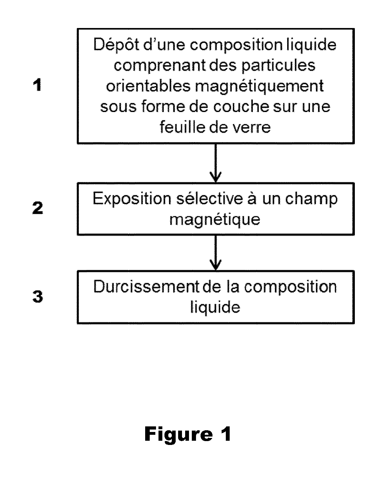

Comme illustré à la figure 1, la méthode de l'invention comprend une étape (1) de dépôt sous forme de couche d'une composition liquide sur au moins une partie de la face de la feuille de verre opposée à celle reposant sur le convoyeur. La composition liquide peut être déposée sous forme de couche par tout moyen. La composition liquide selon l'invention peut, par exemple, être déposée sur la feuille de verre par enduction au rideau (« curtain coater »), par enduction au rouleau (« roller coater ») ou par pulvérisation (« spray coating »). La feuille de verre, durant l'étape (1), peut être immobile ou bien alternativement, être en mouvement, c'est-à-dire défiler soit sur un convoyeur qui se prolongera alors jusqu'à l'étape (2) soit sur un tapis. De manière préférée, la composition liquide est déposée par enduction au rideau, car cette technique de dépôt permet d'appliquer à grande vitesse (par exemple, 50 mètre par minute) une couche liquide sur un substrat plan en mouvement. Dans ce cas, la feuille de verre préférentiellement défile sur deux tapis, le rideau de composition liquide se déversant entre eux.

Le poids de composition liquide (donc juste après l'étape (2) mais avant l'étape 3 de durcissement) par unité de surface de la feuille de verre est de préférence d'au moins 50 g/m². Le poids de composition liquide par unité de surface est également de préférence d'au plus 180 g/m². De manière toute préférée, le poids de composition liquide par unité de surface est de 80 g/m² à 120 g/m².

Selon l'invention, la couche de composition liquide est déposée sur au moins une partie d'une des faces de la feuille de verre. Préférentiellement, la couche de composition liquide est déposée sur pratiquement la totalité de la surface d'une des faces de la feuille de verre. Par pratiquement la totalité de la surface, on entend au moins 90% de la surface.

Selon l'invention, la composition liquide comprend des particules orientables magnétiquement. Les particules orientables magnétiquement se comportent comme des aimants miniatures. Lorsqu'on les place dans un champ magnétique, de telles particules ont tendance à s'orienter dans le champ appliqué de manière à ce que leur axe magnétique s'aligne avec les lignes de force magnétique du champ. Selon l'invention, les particules orientables magnétiquement peuvent être du type décrit notamment dans US 3,676,273; US 4,838,648 ; WO 02/073250 ; EP 686 675 A1 ou WO 2007/131833. De préférence, les particules orientables magnétiquement selon l'invention sont à base de fer. Selon l'invention, les particules orientables magnétiquement peuvent être aplaties ou en forme de pétales (« flakes »). La quantité de particules orientables magnétiquement dans la composition liquide (avant durcissement) est préférentiellement comprise entre 20 et 80 % en poids de ladite composition liquide. De manière toute préférée, la composition liquide comprend entre 30 et 70 % en poids de particules orientables magnétiquement.

Selon l'invention, la composition liquide comprend un milieu liquide dans lequel les particules orientables magnétiquement sont en suspension. Par exemple, la composition liquide selon l'invention peut être une peinture, une laque, un vernis, un émail ou une encre. Selon un mode de réalisation particulier, la composition liquide selon l'invention comprend au moins un composant choisi parmi les acrylates, acryliques, résines acryliques, résines polyacrylates, uréthanes, polyuréthanes, polyamide, polyols, résines mélamines, polycarbonates, polyesters, polyoléfines, polyamides, les résines aminées, les résines époxy, les résines phénoliques, les résines siliconées, le PVC et le PVB. De manière préférée, la composition liquide selon l'invention comprend au moins un composant choisi parmi les acrylates, acryliques, résines acryliques, résines polyacrylates et les résines mélamines. De manière particulièrement préférée, la composition liquide selon l'invention comprend au moins un composant choisi parmi les résines méthacryliques, les résines mélamine-formaldéhyde et les résines époxy.

Selon l'invention, la composition liquide peut également avantageusement comprendre d'autres composants tels qu'un agent durcisseur, un ou plusieurs solvants, un plastifiant, un agent dispersant, un catalyseur, un photo-initiateur, un promoteur d'adhésion, un agent anti-UV, des pigments non magnétiques, des colorants, un agent de flux, un agent de mouillage, un agent anti-mousse,...

Comme illustré à la figure 1, la méthode selon l'invention comprend une étape (2) d'exposition sélective de la feuille de verre comportant la couche de composition liquide à un champ magnétique.

Dans la méthode de l'invention, la feuille de verre défile sur un convoyeur horizontal à rouleaux au moins durant l'étape d'exposition sélective (2), dans une direction perpendiculaire à la plus grande dimension desdits rouleaux, la composition liquide étant sur la face opposée à celle reposant sur le convoyeur. Le convoyeur à rouleaux selon l'invention est un convoyeur à rouleaux classique, typiquement utilisé dans des chaînes de production de feuille de verre. Il comporte généralement plusieurs rouleaux positionnés parallèlement l'un à l'autre dans la longueur et sensiblement à la même hauteur, espacés d'une distance permettant à la feuille de verre de poser au moins sur deux rouleaux. Chaque rouleau peut également avantageusement comporter classiquement plusieurs « O-rings », c'est-à-dire des joints en caoutchouc sur la circonférence de la section du rouleau, évitant le contact direct du verre et du matériau du rouleau. La vitesse de défilement de la feuille de verre sur le convoyeur varie de préférence entre 1 et 15 mètres par minute. De manière toute préférée, La vitesse de défilement de la feuille de verre sur le convoyeur varie de préférence entre 2 et 10 mètres par minute.

Selon l'invention, l'étape d'exposition sélective (2) est réalisée au moyen d'au moins un rouleau du convoyeur, ce rouleau comportant au moins un élément en matériau à magnétisation variable, contrôlé individuellement et intégré dans sa surface, également appelé « rouleau modifié » dans la suite du présent texte. Selon un mode de réalisation, le rouleau modifié est fait d'un corps cylindrique en matériau non magnétique. Par exemple, le corps cylindrique du rouleau est en acier non magnétique ou en aluminium.

Selon un mode de réalisation, l'élément en matériau à magnétisation variable est avantageusement un électro-aimant. Classiquement, un électro-aimant comprend un noyau en matériau perméable magnétiquement et un fil électrique enroulé autour du noyau (également appelé « bobine »). Quand la bobine est parcourue par un courant, il se crée un champ magnétique canalisé par le circuit magnétique. L'électro-aimant joue donc le rôle d'un aimant commandé/contrôlé par un courant électrique. La force d'un électro-aimant dépend de la perméabilité magnétique de son noyau, du nombre de spires de la bobine et du courant envoyé dans ladite bobine. Avantageusement, en pratique, la force des électro-aimants dans la méthode de l'invention sera modulée/contrôlée via le courant.

Avantageusement, on utilise un noyau dans un matériau qui présente un phénomène d'hystérésis limité (afin de réduire toute rémanence) et/ou une grande perméabilité magnétique (afin de pouvoir limiter la taille des bobines).

Par contrôlé individuellement, on entend que, lorsqu'on a plusieurs électro-aimants, chacune des bobines peut être soumise individuellement et indépendamment des autres bobines à un courant qui va générer un champ magnétique. Lorsqu'un électro-aimant est soumis à un courant, dans le présent texte, on parlera d'électro-aimant « activé ». Avantageusement, le courant envoyé vers la/les bobine(s) est un courant pulsé modulé en largeur d'impulsion (ou « PWM).

Selon l'invention, par élément en matériau à magnétisation intégré dans la surface d'un rouleau du convoyeur, cela signifie que l'élément en matériau à magnétisation permanente est intégré dans le corps cylindrique dudit rouleau, sa surface externe se situant soit (i) légèrement sous la surface externe du rouleau, soit (ii) sensiblement au même niveau que la surface externe du rouleau, affleurant celle-ci sans la dépasser ou encore (iii) dans le cas où chaque rouleau du convoyeur (y compris le rouleau modifié) comporte plusieurs « O-rings », légèrement sous la surface externe desdits « O-rings » ou au même niveau, sans la dépasser. Les électro-aimants peuvent être positionnés dans le corps cylindrique du rouleau modifié grâce à des petites cavités présentes dans ce corps cylindrique. Avantageusement, la « profondeur » de l'électro-aimant dans sa cavité peut être adaptée afin de modifier la distance entre l'électro-aimant et la couche déposée sur la feuille de verre, ce qui permet de modifier légèrement le rendu optique du motif induit magnétiquement lorsque l'épaisseur de verre reste constante ou bien de garder un rendu optique identique lorsqu'on fait passer des feuilles de verre plus épaisses sur le convoyeur.

Avantageusement, afin de produire des motifs plus complexes dans la couche déposée sur la feuille de verre, le rouleau du convoyeur modifié comporte plusieurs électro-aimants. Selon ce mode de réalisation, les électro-aimants peuvent être identiques, en terme de forme, de taille et de force. Alternativement, les électro-aimants permanents peuvent être différents, en terme de forme, de taille et/ou de force.

La forme et la taille des électro-aimants déterminera respectivement la forme et la taille du motif induit dans la couche par chacun de ces éléments et donc, l'aspect du motif global. Selon un mode de réalisation particulier, l'électro-aimant peut comporter, à l'extrémité du noyau dirigée vers la feuille de verre, dans son prolongement ou sous forme d'une pièce rapportée, un élément de forme en matériau perméable magnétiquement avec un hystérésis faible (par exemple, dans le même matériau que le noyau) dans le but d'induire des motifs spécifiques et plus élaborés (par exemples, des motifs en forme d'étoile).

La force des électro-aimants, qui peut être modulée, déterminera le rendu optique/esthétique du motif induit magnétiquement. Une force plus importante donnera un motif plus marqué, avec une impression de profondeur plus marquée, parfois de couleur plus foncée aussi. Toujours selon ce mode de réalisation, les électro-aimants peuvent être placés à des distances identiques de la feuille de verre et donc de la couche ou, alternativement, à des distances différentes, en faisant varier la « profondeur » des électro-aimants intégrés dans la surface du rouleau modifié.

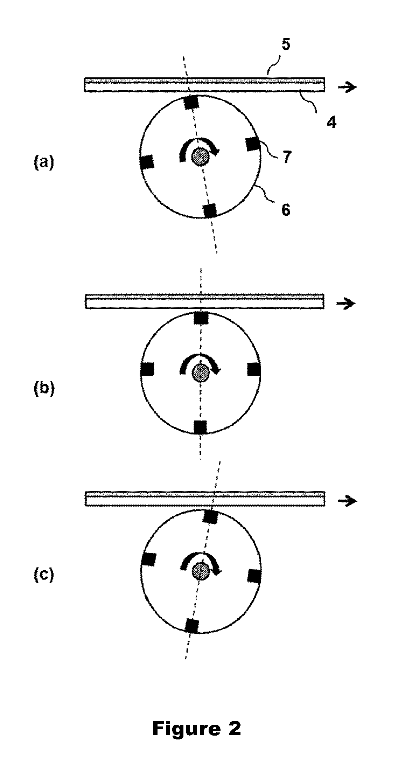

Le rouleau modifié, comportant au moins un électro-aimant intégré dans sa surface, permet de produire des lignes de champ magnétique dans un voisinage de la feuille défilant sur le convoyeur. Avantageusement selon l'invention, l'exposition au lignes de champ magnétique se fait de façon très efficace car la feuille de verre et donc la couche est exposée au champ magnétique durant un temps suffisant, même en cas de vitesse élevée de défilement de la feuille de verre sur le convoyeur requise généralement par un processus en ligne. En effet, ceci est illustré à la figure 2 (vue en coupe parallèle à la direction de défilement de la feuille de verre), montrant une feuille de verre (4) recouverte par une couche de composition liquide (5) après l'étape de dépôt (1) défilant (dans le sens indiqué par la flèche) au-dessus d'un rouleau modifié (6) selon l'invention dans lequel quatre électro-aimants (7) ont été intégrés dans la surface dudit rouleau, placés sur sa circonférence à 90° l'un de l'autre. Cette figure montre, en (a), le mouvement d'approche d'un des électro-aimants du rouleau vers la feuille de verre, générant déjà des lignes de champ au voisinage de la feuille, en (b) la position dudit aimant en vis-à-vis de la feuille de verre générant la magnétisation maximale, et en (c), le mouvement d'éloignant de l'aimant, générant encore des lignes de champ au voisinage de la feuille.

Selon l'invention, le motif induit par un électro-aimant présent sur le rouleau modifié et activé est répété dans la couche de manière régulière dans la direction de déplacement de la feuille, avec un espacement correspondant à la circonférence de la section du rouleau modifié. Si le rouleau comporte plus d'un électro-aimant alignés dans la circonférence d'une section du rouleau et espacés de façon régulière, le motif induit est alors répété dans la direction de déplacement de la feuille, avec un espacement correspondant à la circonférence de la section du rouleau modifié divisée par le nombre d'électro-aimants présents sur cette circonférence.

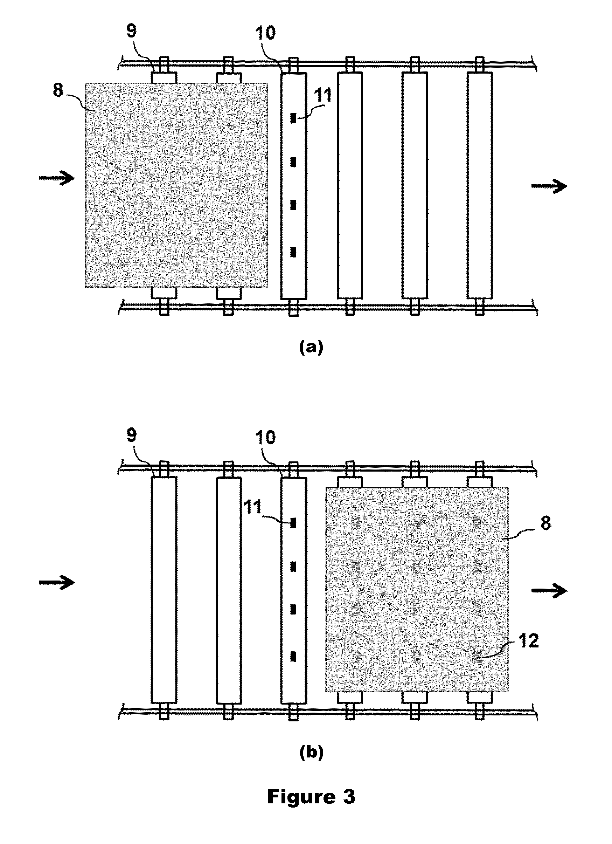

La figure 3 illustre le processus de l'étape (2) selon l'invention. A la figure 3 (a), la feuille de verre (8) recouverte par une couche de composition liquide comprenant des particules orientables magnétiquement défile, dans le sens des flèches, sur un convoyeur à rouleaux (9) et approche d'un rouleau modifié (10) selon l'invention comportant quatre électro-aimants (11) intégrés dans sa surface et alignés dans sa longueur. Après avoir défilé au-dessus du rouleau modifié (figure 3 (b)), des motifs magnétiquement induits (12), correspondant sensiblement à la forme et à la taille des électro-aimants, sont créés dans la couche de composition liquide sous forme de lignes de quatre motifs espacées d'une distance correspondant à la circonférence de la section du rouleau.

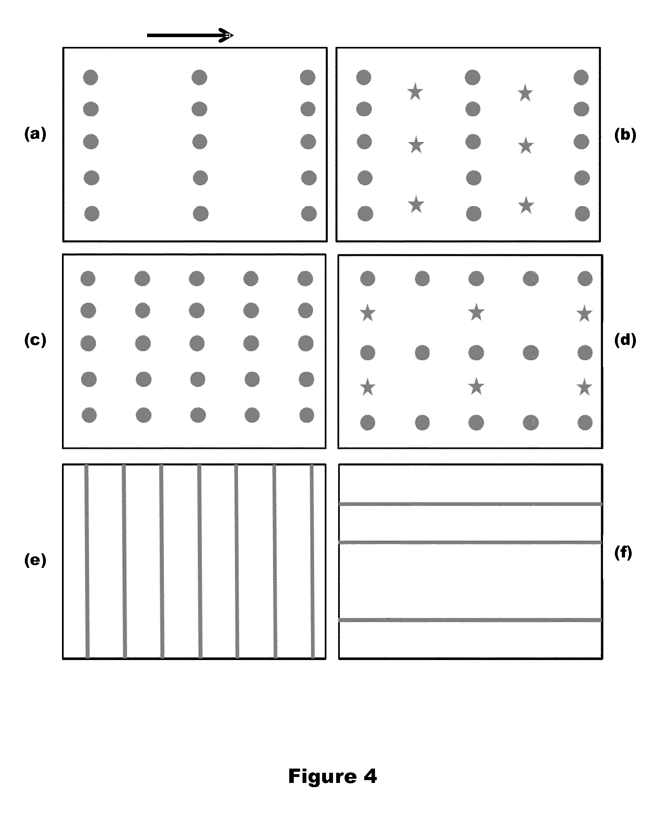

Les figures 4 (a) à (d) présentent schématiquement des exemples d'agencements de motifs induits magnétiquement dans une couche déposée sur une feuille de verre selon l'invention grâce à des électro-aimants intégrés dans un rouleau du convoyeur.

Avantageusement, afin de produire des motifs plus complexes dans la couche déposée sur la feuille de verre, le convoyeur peut comporter plusieurs rouleaux modifiés, identiques ou différents. Ce mode de réalisation est bien entendu compatible, pour chaque rouleau, avec tous les modes de réalisation exposés plus haut correspondant au rouleau modifié.

Dans le cas de l'utilisation de plusieurs rouleaux modifiés intégrant chacun une grande quantité d'électro-aimants, il est possible d'induire magnétiquement des motifs/images très complexes dans la couche.

Comme illustré à la figure 1, la méthode selon l'invention comprend une étape (3) de durcissement de la composition liquide. Cette étape permet de passer d'une couche liquide, humide à une couche dure et sèche. Elle permet dès lors de figer les particules orientées et donc de fixer les motifs créés dans la couche par l'étape de magnétisation sélective. L'étape de durcissement selon l'invention peut être réalisée par un séchage de la composition (par exemple, évaporation de solvants) et/ou par réticulation. Par réticulation, on entend une étape qui implique des réactions chimiques de polymérisation et la formation d'un réseau polymérique tridimensionnel. Le durcissement par réticulation selon ce mode de réalisation peut être obtenu par un chauffage (typiquement à des températures de l'ordre de 100 à 200°C) et/ou par exposition à un rayonnement (par exemple, UV ou infra-rouge). Dans le cas de l'utilisation de la réticulation comme mode de durcissement de la couche de l'invention, la composition liquide comprend avantageusement un agent durcisseur/catalyseur.

L'épaisseur de la couche selon l'invention, une fois durcie à l'étape 3, est d'au moins 5 microns et d'au plus 150 microns. De préférence, l'épaisseur de la couche selon l'invention, une fois durcie à l'étape 3, est d'au moins 20 microns et d'au plus 120 microns.

Selon un mode de réalisation particulier, la méthode de l'invention comprend une étape supplémentaire de traitement de la feuille de verre avec un primaire d'adhésion avant le dépôt (1) de la couche de composition liquide. Ce primaire d'adhésion peut être déposé par toute manière connue dans l'art. Le primaire d'adhésion permet une meilleur adhésion de la couche une fois durcie sur le verre. Le silane est un composé communément utilisé pour un tel traitement.

De préférence, la couche selon l'invention est en contact direct avec le verre, c'est-à-dire qu'aucune autre couche n'est présente entre le verre et la couche comportant les particules orientable magnétiquement. Le traitement avec un primaire d'adhésion de type silane ne constitue pas une autre couche au sens du présent mode de réalisation. Donc, ce mode de réalisation n'est pas incompatible avec un traitement au silane.

Selon un autre mode de réalisation particulier, la méthode de l'invention comprend une étape supplémentaire de nettoyage de la feuille de verre, avant le dépôt de la couche de composition liquide et au moins de la face destinée à recevoir la composition liquide. Ce nettoyage peut être réalisé, par exemple, avec de l'eau ou une solution aqueuse contenant un détergent.

Selon encore un mode de réalisation particulier, la méthode de l'invention comprend une étape supplémentaire de polissage de la feuille de verre à l'aide d'un agent de polissage, avant le dépôt (1) de la couche de composition liquide et au moins sur la face destinée à recevoir la composition liquide. Un exemple d'agent de polissage qui peut être utilisé est une poudre comprenant de l'oxyde de cérium, CeO₂.

Selon un mode de réalisation particulier, la méthode de l'invention comprend une étape supplémentaire après l'étape (3) de durcissement, correspondant au dépôt d'au moins une couche supplémentaire, recouvrant alors la couche durcie. Il peut s'agir par exemple d'une couche de protection mécanique, d'une couche anti-reflet, d'une couche anti-traces de doigts, etc.

Avantageusement, la méthode de l'invention peut être facilement et rapidement mise en oeuvre dans une chaîne de production existante de feuilles de verre peintes, en remplaçant un ou plusieurs rouleaux du convoyeur initial par des rouleaux modifiés selon l'invention et surtout, elle permet de revenir à la chaîne de production initiale de façon rapide et aisée, sans intervention de démontage/montage sur la ligne, uniquement en n'alimentant plus en courant les électro-aimants.

Les exemples qui suivent illustrent l'invention, sans intention de limiter de quelque façon sa couverture.

### Exemple (conforme à l'invention)

Une feuille de verre clair de 3,21 m x 2,25 m (DLF) et d'une épaisseur de 4 mm a été placée sur un convoyeur à rouleaux. Sur son trajet sur le convoyeur, elle a d'abord subit un polissage avec une poudre comprenant de l'oxyde de cérium afin de nettoyer sa surface. Elle a ensuite subit un traitement au silane.

Elle est ensuite passée sous un applicateur à rideau avec une vitesse d'environ 50 mètres par minute afin d'y déposer la composition liquide selon l'invention. La composition liquide appliquée est une peinture de couleur gris clair comprenant un clearcoat Glassorex (de la société Fenzi) à base de résines du type méthacrylique mélamine-formaldéhyde et époxy, et comprenant 50 % en poids de pigments FERRICON^{®} 160 de la société Eckart. La quantité de composition liquide appliquée sur la feuille de verre est de 100 g/m².

Ensuite, la feuille de verre a été freinée jusqu'à une vitesse sensiblement constante de l'ordre de 4 mètres par minute et à ce moment, elle est passée au-dessus d'un rouleau du convoyeur modifié selon l'invention. Le rouleau, en aluminium, avait été modifié par l'incorporation dans sa surface (la surface externe des aimants arrivant légèrement sous la surface du rouleau) de 128 électro-aimants équidistants, positionnés dans la longueur du rouleau et répartis en deux rangées de 64, à 180° l'une de l'autre. Les électro-aimants utilisés sont tous identiques, ils ont un noyau de forme cylindrique.

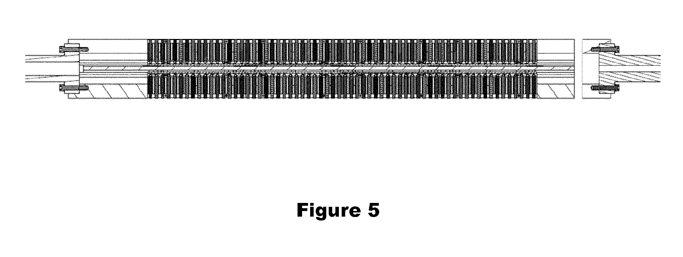

Une coupe dans la longueur du rouleau modifié utilisé est montrée schématiquement à la Figure 5.

Chaque électro-aimant a été positionné dans le rouleau, dans des cavités, de manière à ce que sa longueur soit perpendiculaire à la longueur du rouleau et qu'une des extrémités circulaires du noyau cylindrique soit positionnée vers l'extérieur de la surface du rouleau, légèrement au-dessus de cette surface mais en-dessous de la surface externe des O-rings utilisés.

La feuille de verre a ainsi été exposée sélectivement à un champ, créant dans la composition liquide des motifs d'apparence tridimensionnelle, de couleur plus foncée, répétitifs et de forme circulaire. Le champ mesuré à ce moment au niveau de chaque électroaimant a été estimé à environ 150 mT.

Finalement, elle est passée dans un four chauffé à 165-170°C pendant quelques minutes et la composition liquide s'est alors durcie/réticulée, figeant ainsi les motifs créés à l'étape précédente.

## Revendications

1. Méthode pour produire des motifs induits magnétiquement dans une couche déposée sur une feuille de verre, ladite méthode comprenant les étapes successives suivantes :
- déposer sous forme de couche une composition liquide sur au moins une partie d'une des faces de la feuille de verre ladite composition comprenant des particules orientables magnétiquement ;
- exposer sélectivement à un champ magnétique la feuille de verre comportant la couche de composition liquide pendant que ladite feuille de verre défile sur un convoyeur horizontal à rouleaux, dans une direction perpendiculaire à la plus grande dimension desdits rouleaux, la composition liquide étant sur la face opposée à celle reposant sur le convoyeur; et
- durcir la composition liquide ;
**caractérisée en ce que** l'étape d'exposition sélective à un champ magnétique est réalisée au moyen d'au moins un rouleau dudit convoyeur comportant au moins un élément en matériau à magnétisation variable, contrôlé individuellement et intégré dans sa surface, de manière à produire des lignes de champ magnétique variable dans un voisinage de la feuille défilant sur le convoyeur.

2. Méthode selon la revendication précédente, **caractérisée en ce que** la vitesse de défilement de la feuille de verre sur le convoyeur au moment de l'étape d'exposition sélective est de 1 et 15 mètres par minute.

3. Méthode selon la revendication précédente, **caractérisée en ce que** la vitesse de défilement de la feuille de verre sur le convoyeur au moment de l'étape d'exposition sélective est de 2 et 10 mètres par minute.

4. Méthode selon l'une des revendications précédentes, **caractérisée en ce que** la quantité de particules orientables magnétiquement dans la composition liquide avant durcissement est comprise entre 20 et 80 % en poids de ladite composition liquide.

5. Méthode selon la revendication précédente, **caractérisée en ce que** la quantité de particules orientables magnétiquement dans la composition liquide avant durcissement est comprise entre 30 et 70 % en poids de ladite composition liquide.

6. Méthode selon l'une des revendications précédentes, **caractérisée en ce que** l'épaisseur de la couche, après l'étape de durcissement, est d'au moins 5 microns et d'au plus 150 microns.

7. Méthode selon l'une des revendications précédentes, **caractérisée en ce qu'**elle comprend une étape supplémentaire de traitement de la feuille de verre avec un primaire d'adhésion avant le dépôt de la couche de composition liquide.

8. Méthode selon l'une des revendications précédentes, **caractérisée en ce que** la composition liquide est déposée par enduction au rideau.

9. Méthode selon l'une des revendications précédentes, **caractérisée en ce que** le poids de composition liquide par unité de surface de la feuille de verre avant l'étape de durcissement est d'au moins 50 g/m2.

10. Méthode selon la revendication précédente, **caractérisée en ce que** le poids de composition liquide par unité de surface de la feuille de verre avant l'étape de durcissement est de 80 g/m2 à 120 g/m2.

11. Méthode selon l'une des revendications précédentes, **caractérisée en ce que** la feuille de verre est une feuille de verre flotté de type sodo-calcique.
